# EUROPEAN PATENT SPECIFICATION

(11) **EP 4 362 184 B1**
(45) Date of publication and mention of the grant of the patent: **22.04.2026**
(21) Application number: 22917713.4
(22) Date of filing: 05.01.2022
(51) Int. Cl.: H01M 10/04, H01M 50/103, H01M 50/133, H01M 50/14, H01M 50/202, H01M 50/529

(54) **BATTERY CELL AND MANUFACTURING METHOD THEREFOR, BATTERY, AND ELECTRIC DEVICE**
BATTERIEZELLE UND HERSTELLUNGSVERFAHREN DAFÜR, BATTERIE UND ELEKTRISCHE
ÉLÉMENT DE BATTERIE ET PROCÉDÉ DE FABRICATION ASSOCIÉS, BATTERIE ET DISPOSITIF ÉLECTRIQUE

(43) Date of publication of application: 01.05.2024
(60) Divisional application: 26153125.5
(73) Proprietor: Contemporary Amperex Technology (Hong Kong) Limited, Central, Central And Western District (HK)
(72) Inventor: LIN, Jia, Ningde, Fujian 352100 (CN); CHEN, Wenwei, Ningde, Fujian 352100 (CN); SHI, Huan, Ningde, Fujian 352100 (CN); LIN, Jiang, Ningde, Fujian 352100 (CN)
(74) Representative: Ran, Handong
(86) International application number: PCT/CN2022/070197
(87) International publication number: WO 2023/130235

(56) References cited:
- WO-A1-2017/179768
- WO-A1-2017/179768
- CN-A- 1 316 114
- CN-A- 113 767 521
- KR-A- 20160 044 322
- KR-A- 20160 044 322

## Description

### TECHNICAL FIELD

The present application relates to the technical field of batteries, and in particular to a battery cell and manufacturing method and apparatus thereof, a battery, and an electrical apparatus.

### BACKGROUND

Lithium-ion batteries have been widely used due to their advantages such as high energy density, high power density, high reusability, and long storage time.

In the current battery cells, the electrode assembly is generally directly provided in the case, but the electrode assembly may be damaged during the process of being installed into a case or during the use of battery, which does not have high reliability.

KR 2016 0044322 A and WO 2017/179768 A1 disclose battery cells known from the related prior art.

### SUMMARY OF THE INVENTION

An object of the present application is to improve the reliability of battery cells during assembly and use.

In a first aspect of the present application, a battery cell according to claim 1 is provided. The battery cell includes: an electrode assembly including a main body portion and a tab, the tab being connected with a side portion of the main body portion in a first direction; and a protective frame, which includes three segments of protective plates integrally joined together and respectively used for protecting three side faces of the main body portion, wherein the three segments of protective plates comprise a first plate, a second plate and a third plate, the third plate is located between the first plate and the second plate, two ends of the third plate are respectively connected with a first end of the first plate and a first end of the second plate, and at least one of the first plate, the second plate and the third plate is provided with an opening; wherein the tab is led out from the opening.

In this embodiment, by providing a protective frame on the electrode assembly, the side faces of the electrode assembly can be protected, so as to protect the electrode assembly during the process of installing the electrode assembly into the case and after it being installed into the case, thereby preventing the electrode assembly from being damaged. Moreover, the protective frame is of an integrated structure with overall rigidity, after installation, the overall rigidity of the electrode assembly can be improved, and assembly is facilitated. The protective frame occupies a small space, having a small influence on the energy density of the battery cell, thereby having good adaptability to thin batteries.

In addition, the tab is led out from the opening on the protective frame, which has an effect of constricting the tab, bringing the fluffy tab together, and facilitating electrical connection with electrode terminal by welding, which is also capable of preventing the tab from being inserted into the main body portion and causing active material to fall off. By providing the protective frame outside the electrode assembly, interference between the electrode assembly and the rounded corners arranged at the edges of the case can be avoided. The above advantages help to improve the reliability and safety of the battery cells during assembly and use.

In some embodiments, the first plate, the second plate, and the third plate are all arranged parallel to a second direction, the second direction being perpendicular to the first direction.

In these embodiments, the first plate and the second plate can be respectively used for protecting two side faces of the main body portion adjacent to the side face from which the tab is led out, and these two side faces are arranged opposite to each other in a third direction, which facilitates the installation of the protective frame outside the electrode assembly, and it is beneficial to strengthen the fixing effect on the root portion of the tab.

In some embodiments, the electrode assembly is of a laminated structure, the electrode assembly has a first electrode sheet and a second electrode sheet with opposite polarities and being stacked along the second direction, and the first plate and the second plate respectively protect two side faces of the main body portion perpendicular to the third direction, the third direction being perpendicular to the first direction and the second direction.

In these embodiments, a stacked type electrode assembly is used, which is flexible in size. The first electrode sheet and the second electrode sheet may be cut into rectangular structures, which can better occupy the space in the case and improve the energy density of the battery cell. With regard to the stacked type electrode assembly, since the first electrode sheet and the second electrode sheet are relatively independent, by arranging the protective frame, it is possible to limit the outer periphery of the first electrode sheet and the second electrode sheet, so that all the first electrode sheets and the second electrode sheets can be aligned, the first plate and the second plate respectively protect two side faces of the main body portion perpendicular to the third direction, which is equivalent to protecting three end faces of the electrode assembly by means of the protective plate, it is capable of preventing impurities from entering the interior of main body portion through the gap between the electrode sheets, and preventing the electrode assembly from being damaged due to the fact that the end portions may not be completely aligned during the process of being installed into the case.

In some embodiments, the electrode assembly includes two tabs, the two tabs are respectively located on both sides of the main body portion in the first direction, and the opening is provided on the third plate, and one of the tabs is led out from the opening.

In these embodiments, one of the tabs is led out from the opening on the protective frame, which facilitates the installation of the protective frame from this side of the tab, it is easy to assemble.

In some embodiments, each of the first plate, the second plate, and the third plate entirely covers the respective side face of the main body portion.

In these embodiments, sufficient protection can be provided for side faces of the main body portion by means of the protective plate, which has a better protection effect, and is capable of maximizing the overall rigidity of the electrode assembly. Optionally, the first plate, the second plate, and the third plate may also partially cover respective to-be-protected side faces.

In some embodiments, a joint between the third plate and the first plate and a joint between the third plate and the second plate are both provided with a first pre-crease.

In these embodiments, by providing the first pre-creases, as shown in the figure, before assembly, the protective frame is in a long strip structure, it is not easy to deform during storage and transfer. As shown in the figure, during assembly, the protective frame is bent at first pre-creases to form a predetermined structure. Since the strength of the protective frame at first pre-crease is less than other positions, the shape of the protective frame can be better matched with the electrode assembly after bending, so that the protective frame can provide better protection for the electrode assembly.

In some embodiments, the thickness of the third plate is greater than the thickness of the first plate and the second plate; alternatively, the protective frame further includes a reinforcing plate, the reinforcing plate is attached to a side face of the third plate, and the sum of thicknesses of the reinforcing plate and the third plate is greater than the thickness of the first plate and the second plate.

In these embodiments, by increasing the thickness of the third plate, the overall strength of the protective frame can be increased, the overall protection effect on the electrode assembly can be improved, and the protection effect on the tab can be improved.

According to the invention, the opening extends along the width direction of the tab, the at least one of the first plate, the second plate and the third plate is provided with a cutout at each end of the opening along the width direction of the tab, and each cutout extends by a preset distance to both sides of the opening, so that the opening and the two cutouts define two door structures, and the two door structures are configured to be relatively openable in a direction away from the main body portion.

In these embodiments, by arranging two cutouts at both ends of the opening, two door structures are defined by the cutouts and the opening together, and the two door structures can be opened outward, which facilitates the tab to pass through the opening, and after the tab passing through, the door structure returns to the original position under the action of an elastic force of the material or an external force so as to better constrict the tab. This structure not only facilitates the assembly between the protective frame and the electrode assembly, but also ensures the constricting effect on the tab, thereby improving assembly performance.

In some embodiments, a second pre-crease is provided at a connecting line between end portions of the two cutouts on the same side.

In these embodiments, by providing the second pre-crease, the strength at the second pre-crease is less than other positions, it is easier to open the door structure outward with the second pre-crease as the axis when the tab is passed through the opening, which facilitates the tab to pass through the opening. Furthermore, after the tab passes through the opening, it is also convenient to press the door structure back towards the main body portion to ensure the constricting effect on the tab.

In some embodiments, the protective frame further includes a reinforcing plate, the reinforcing plate is attached to an outer side face of the third plate, the reinforcing plate is provided with a through groove, and the size of the through groove is not smaller than the region defined by the two cutouts.

In these embodiments, by providing the reinforcing plate, the thickness of the third plate can be increased, the overall strength of the protective frame can be increased, the overall protection effect on the electrode assembly can be improved, and the protection effect on the tab can be improved. On this basis, the door structure can be avoided by arranging the through groove on the reinforcing plate, so that the opening and closing of the door structure is not restricted, thereby ensuring that the tab passes through the opening smoothly.

In some embodiments, an adhesive layer is further included, and the adhesive layer is attached to the outer side of the tab, so as to fix the tab with the protective plate provided with the opening.

In these embodiments, before the protective frame is installed, the adhesive layer is attached to both sides of the tab, so that after the tab passes through the opening and the protective frame is installed in place, the protective plate and the tab can be relatively fixed, so as to better constrict the tab, moreover, it is easy to arrange the adhesive layer without increasing difficulty of the assembly.

In some embodiments, the battery cell further includes two plastic plates, the two plastic plates are respectively provided on both sides of the opening, the plastic plates are fixed, through hot melt, on the outer side of the protective plate provided with the opening, and the tab is led out from the gap between the opening and the two plastic plates.

In these embodiments, after the tab passes through the opening, the two plastic plates are fixed on both sides of the tab on the protective plate through hot melt, so that the protective plate and the tab can be relatively fixed, so as to better constrict the tab. In addition, the plastic plates are fixed after the tab passes through the opening, so that the tab can pass through smoothly, the plastic plates further have an effect of reinforcing the protective plate, so as to increase the rigidity of the protective plate, and provide a better constricting effect on the tab.

In some embodiments, the opening is provided on the third plate, and a first end of the first plate and a first end of the second plate are both higher than the outer side face of the third plate in the first direction.

In these embodiments, the tab is protected by the portions of the first plate and the second plate which higher than the third plate, so that the end portion of the tab in the width direction is prevented from being damaged during assembly or use, which provides better protection for a structure in which the width of the tab extends close to the end of the main body portion, thereby avoiding contact short circuit between the tab and the case due to vibration or impact during use.

In some embodiments, the protective frame further includes two segments of connecting plates, two ends of the third plate are respectively connected with a first end of the first plate and a first end of the second plate through a segment of the connecting plate.

In these embodiments, by arranging the connecting plates at joints between two ends of the third plate and respective the first plate and the second plate, which not only facilitates forming the special-shaped protective frame integrally, but also increases the strength of the protective frame at bend positions, so that overall rigidity of the protective frame can be improved, thereby protecting the electrode assembly effectively.

In some embodiments, a joint between the first plate and the connecting plate, joints between two ends of the third plate and respective connecting plates, and a joint between the second plate and the connecting plate are all provided with a first pre-crease.

In these embodiments, before assembly, the protective frame may be arranged as a long-strip structure, it is not easy to deform during storage and transfer. Specifically, two of first pre-creases which are spaced apart by a preset distance may be respectively arranged on both sides of the third plate, and the preset distance is the width of the connecting plate, and the opening may extend on the third plate utile it reaches the outermost first pre-crease. When assembled, the protective frame is bent at first pre-creases to form a predetermined structure. Since the strength of the protective frame at first pre-creases is less than other positions, the shape of the protective frame can be better matched with the electrode assembly after bending, so that the protective frame can better protect the electrode assembly.

In a second aspect of the present application, a battery is provided, comprising: the battery cell in the above embodiments; and a shell assembly for accommodating the battery cell.

In a third aspect of the present application, an electrical apparatus is provided, comprising the battery in the above embodiments, where the battery is configured to provide electric energy for the electrical apparatus.

In a fourth aspect of the present application, a manufacturing method according to claim 14 is provided. Particularly, the manufacturing method comprises:
a component providing step of providing an electrode assembly and a protective frame; wherein the electrode assembly comprises a main body portion and a tab, the tab is arranged on a side portion of the main body portion in a first direction, the protective frame includes three segments of protective plates integrally joined together and respectively used for protecting three side faces of the main body portion, the three segments of protective plates comprise a first plate, a second plate and a third plate, the third plate is located between the first plate and the second plate, and two ends of the third plate are respectively connected with a first end of the first plate and a first end of the second plate, at least one of the first plate, the second plate and the third plate is provided with an opening;
a tab lead-out step of leading out the tab from the opening; and
a frame body assembling step of using three segments of protective plates to protect three side faces of the main body portion respectively.

In a fifth aspect of the present application, an manufacturing apparatus for a battery cell is provided, including:
a component providing device configured to provide an electrode assembly and a protective frame; wherein the electrode assembly comprises a main body portion and a tab, the tab is arranged on a side portion of the main body portion in a first direction, the protective frame is of an integrated structure and includes three segments of protective plates respectively used for protecting three side faces of the main body portion, the three segments of protective plates comprise a first plate, a second plate and a third plate, the third plate is located between the first plate and the second plate, and two ends of the third plate are respectively connected with a first end of the first plate and a first end of the second plate, at least one of the first plate, the second plate and the third plate is provided with an opening;
a tab lead-out device configured to lead out the tab from the opening; and
a frame body assembling device configured to protect three side faces of the main body portion by using three segments of protective plates respectively.

### DESCRIPTION OF DRAWINGS

In order to illustrate the technical solutions of the embodiments of the present application more clearly, the drawings required in the embodiments of the present application will be briefly introduced below. Obviously, the drawings described below are only some embodiments of the present application. For those of ordinary skill in the art, other drawings can also be obtained according to the drawings without any creative effort.
Fig. 1 is a schematic structural diagram of some embodiments in which a battery is mounted on a vehicle according to the present application.
Fig. 2 is an exploded view of a battery according to some embodiments of the present application.
Fig. 3 is a front view of a battery cell according to some embodiments of the present application.
Fig. 4 is a cross-sectional view in direction A-A of Fig. 3.
Fig. 5 is an enlarged view of part B in Fig. 4.
Fig. 6 is an exploded view of a battery cell according to some embodiments of the present application.
Fig. 7 is a schematic structural diagram of an electrode assembly according to some embodiments.
Fig. 8 is a schematic structural diagram of some embodiments in which a protective frame is installed on an electrode assembly.
Fig. 9 is a schematic structural diagram of the protective frame in Fig. 8 in an unfolded state.
Fig. 10 is a schematic structural diagram of the protective frame in Fig. 8 in a bent state.
Fig. 11 is a schematic structural diagram of some embodiments in which a reinforcing plate is provided on a side face of a third plate.
Fig. 12 is a schematic structural diagram in which an adhesive layer is provided between the third plate and the tab.
Fig. 13 is a schematic structural diagram in which plastic plates are provided on the outer side of the third plate.
Fig. 14 is a schematic structural diagram of other embodiments in which a protective frame is mounted to an electrode assembly.
Fig. 15 is a front view of Fig. 14.
Fig. 16 is a schematic structural diagram of the protective frame in Fig. 14 in an unfolded state.
Fig. 17 is a schematic structural diagram of the protective frame in Fig. 14 in a bent state.
Fig. 18 is a flowchart of a manufacturing method for a battery cell according to some embodiments of the present application.
Fig. 19 is a schematic structural diagram of a manufacturing apparatus for a battery cell according to some embodiments of the present application.

In the drawings, the drawings are not drawn to actual scale.

### Description of reference numerals:

100. Battery cell; 1. Electrode assembly; 11. Main body portion; 111. First electrode sheet; 112. Second electrode sheet; 113. Separator; 12. Tab; 2. Protective frame; 21. First plate; 22. Second plate; 23. Third plate; 231. Opening; 232. Cutout; 233. Door structure; 24. Reinforcing plate; 241. Through groove; 25. First pre-crease; 26. Second pre-crease; 27. Adhesive layer; 28. Plastic plate; 29. Connecting plate; 3. Case; 31. Opening; 4. End cover assembly; 41. End cover body; 42. Electrode terminal; 5. Adapter;
200. Battery; 201. Shell assembly; 201A. box body; 201B. cover body; 100'. Battery module;
300. Vehicle; 301. Axle; 302. Wheel; 303. Motor; 304. Controller;
400. Manufacturing apparatus; 410. Component providing device; 420. Tab lead-out device; 430. Frame body assembling device.

### DETAILED DESCRIPTION

The implementations of the present application are further described in detail in combination with the drawings and the embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application.

In addition, the terms "first", "second", "third" and so on are used for descriptive purposes only, and cannot be understood to indicate or imply relative importance. "Perpendicular" is not perpendicular in the strict sense, but within the allowable range of error. "Parallel" is not parallel in the strict sense, but within the allowable range of error. The orientation words appearing in the following description are the directions shown in the figure, and do not limit the specific structure of the present application.

In the description of the present application, it should be further noted that unless otherwise prescribed and defined clearly, terms "mounting", "communicating" and "connecting" should be understood in a broad sense, which for example can be a fixed connection and can also be a detachable connection or an integral connection; or can be a direct connection and can also be a connection through an intermediary. For those of ordinary skill in the art, the specific meanings of the above terms in the present application may be understood according to specific circumstances.

Reference herein to "an embodiment" means that a particular feature, structure, or characteristic described in connection with the embodiment can be included in at least some embodiments of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "a plurality of" refers to two or more (including two), and similarly, "multiple groups" refers to two or more (including two) groups, and "multiple sheets" refers to two or more (including two) sheets.

The present application uses descriptions of orientations or positional relationships indicated by "above", "under", "top", "bottom", "front", "rear", "inner" and "outer" and the like, which is only for the convenience of describing the present application, but does not indicate or imply that the referred apparatus must have a specific orientation, or be constructed and operated in a specific orientation, and thus cannot be interpreted as limiting the protection scope of the present application.

The implementations of the present application are further described in detail in combination with the drawings and the embodiments. The following detailed description of the embodiments and the drawings are used to illustrate the principles of the present application by way of example, but should not be used to limit the scope of the present application, that is, the present application is not limited to the described embodiments.

The battery mentioned in the embodiment of the present application refers to a single physical module which includes a plurality of battery cells and therefore provides a higher voltage and capacity. For example, the battery mentioned in the present application may include a battery module, a battery pack, or the like.

The battery cell may include a lithium-ion secondary battery, a lithium-ion primary battery, a lithium-sulfur battery, a sodium lithium-ion battery, a sodium-ion battery or a magnesium-ion battery, etc., which is not limited by the embodiments of the present application. The battery cell may be cylindrical, flat, rectangular, or in other shapes, which is also not limited in the embodiments of the present application. The battery cells are generally divided into three types according to packaging manners: cylindrical battery cells, square battery cells, and pouch battery cells, which is not limited in the embodiments of the present application.

Current battery cells typically include a case and an electrode assembly accommodated in the case, and the case is filled with electrolyte. The electrode assembly is mainly formed by stacking or winding a first electrode sheet and a second electrode sheet with opposite polarities, and a separator is usually provided between the first electrode sheet and the second electrode sheet. Portions of the first electrode sheet and the second electrode sheet coated with an active material constitute a main body portion of the electrode assembly, and portions of the first electrode sheet and the second electrode sheet not coated with an active material constitute a first tab and a second tab. In a lithium-ion battery, the first electrode sheet may be a positive electrode sheet, including a positive electrode current collector and a positive electrode active material layer arranged on both sides of the positive electrode current collector, the material of the positive electrode current collector may be, for example, aluminum, and the positive electrode active material may be, for example, lithium cobalt oxide, lithium iron phosphate, ternary lithium or lithium manganate, etc; the second electrode sheet may be a negative electrode sheet, including a negative electrode current collector and a negative electrode active material layer arranged on both sides of the negative electrode current collector, the material of the negative electrode current collector may be, for example, copper, and the negative electrode active material may be, for example, graphite or silicon, etc. The first tab and the second tab may be located at one end of the main body portion together or located at both ends of the main body portion respectively. During charging and discharging of the battery cell, the positive electrode active material and the negative electrode active material react with the electrolyte solution, and the tab is connected to a terminal to form a current loop.

In practice, the inventors have found that, for electrode assembly with a laminated structure, the side ends of the electrode assembly are not closed, in order to prevent the side ends of the electrode assembly from being damaged during assembly and use, a protective frame may be arranged outside the electrode assembly. In order to provide good protection for the electrode assembly, the inventors have an idea of providing a plurality of separate protective plates, and provide a fixing interface on each protective plate, such as a snap-fit or a fixing hole for a fastener, so that when the battery cell is assembled, each protective plate can be attached to the end face of the electrode assembly, and adjacent protective plates are fixed by means of snap-fit connection or fastener connection, so as to be spliced into a whole protective frame.

However, it is difficult to assemble the protective frame in this manner, and assembly efficiency of the battery cell is affected. In addition, in order to provide fixing interface on the protective plate, the thickness of the protective plate needs to be increased, which will inevitably occupy a large space in a battery cell, thereby affecting the energy density of the battery cell. Therefore, when a protective frame is designed, it is necessary to further reduce the assembly difficulty and minimize the influence on the energy density.

Based on the foregoing technical problem, in the present application, a protective frame is designed for the electrode assembly, which is capable of reducing the assembly difficulty and reducing the influence on the energy density of a battery cell while providing better protection for the electrode assembly.

The battery of the present application may be used for an electrical apparatus, and may provide electric energy for the electrical apparatus, the electrical apparatus may be a mobile phone, a portable device, a laptop, an electric power cart, an electric vehicle, a ship, a spacecraft, an electric toy, an electric tool, or the like. For example, the spacecraft includes an airplane, a rocket, a space shuttle, a spaceship, and the like. The electric toy includes a fixed or mobile electric toy, such as a game console, an electric car toy, an electric ship toy, an electric airplane toy, and the like. The electric tool includes an electric tool for metal cutting, an electric grinding tool, an electric assembly tool, an electric tool for railways, such as an electric drill, an electric grinder, an electric wrench, an electric screwdriver, an electric hammer, an electric impact drill, a concrete vibrator, and an electric planer.

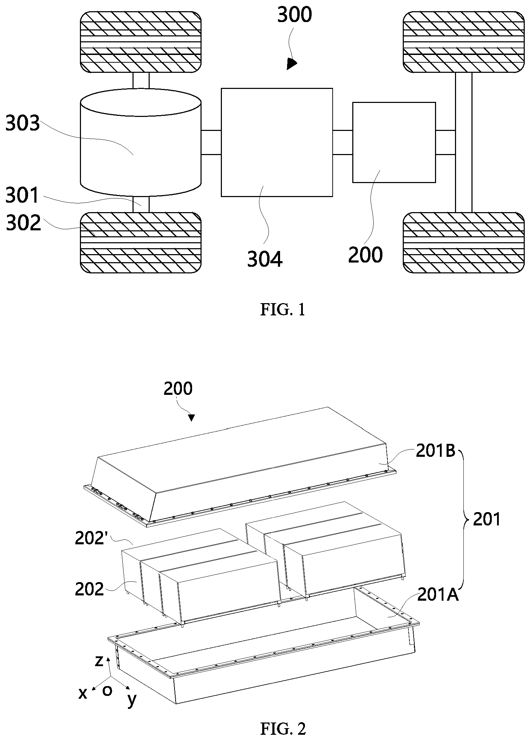

As shown in Fig. 1, the electrical apparatus may be a vehicle 300, for example, a new energy vehicle, and the new energy vehicle may be an all-electric vehicle, a hybrid vehicle, an extended-range electric vehicle, etc.; alternatively, the electrical apparatus may be an unmanned aerial vehicle, a ship, or the like. Specifically, the vehicle 300 may include an axle 301, wheels 302 connected to the axle 301, a motor 303, a controller 304, and a battery 200, the motor 303 is used to drive the axle 301 to rotate, the controller 304 is used to control the operation of the motor 303, and the battery 200 may be arranged at the bottom, head, or tail of the vehicle 300, and is used to provide electric energy for the operation of the motor 303 and other components in the vehicle.

Fig. 2 is a schematic structural diagram of a battery 200 according to some embodiments of the present application, the battery 200 includes a shell assembly 201 and a battery cell 100. In the battery 200, there may be one or more battery cells 100. If there are a plurality of battery cells 100, the plurality of battery cells 100 may be connected in series or in parallel or in parallel-series. The parallel-series means that the plurality of battery cells 100 are connected both in series and in parallel, the plurality of battery cells 100 may be connected in series, in parallel or in a parallel-series manner to form battery modules first, and then a plurality of battery modules are connected in series, in parallel or in parallel-series to form a whole and accommodated in the shell assembly 201. It may also be that all the battery cells 100 are directly connected in series or in parallel or in parallel-series manner, and then the whole formed by all the battery cells 100 is accommodated in the shell assembly 201.

The interior of the shell assembly 201 is a hollow structure, and at least one battery module 100' is accommodated in the shell assembly 201. For example, the shell assembly 201 may include a box body 201A and a cover body 201B. The box body 201A and the cover body 201B in snap-fit with each other. For example, both the box body 201A and the cover body 201B may be hollow rectangular parallelepiped, and each of them has only one surface being an opening surface. The opening of the box body 201A and the opening of the cover body 201B are arranged opposite to each other, and the box body 201A and the cover body 201B are snap-fitted with each other to form a box body with a closed chamber. Alternatively, the box body 201A is a rectangular parallelepiped with an opening and the cover body 201B is in a plate shape, or the cover body 201B is a rectangular parallelepiped with an opening and the box body 201A is in a plate shape, the box body 201A and the cover body 201B are arranged opposite to each other and snap-fitted to form a box body with a closed chamber. After at least one battery module 100' being connected in parallel or in series or in parallel-series or in combination thereof, it is placed in the closed chamber formed by snap-fit between the box body 201A and the cover body 201B.

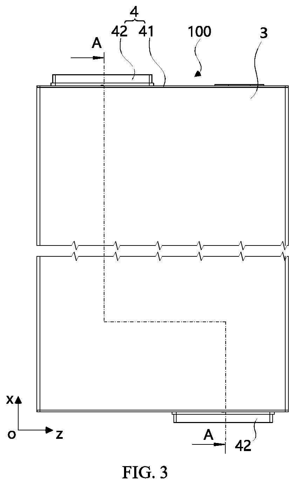

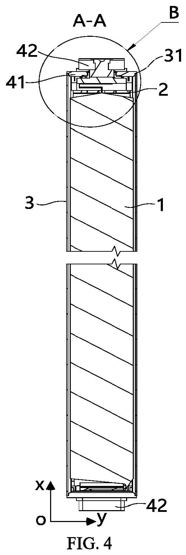

As shown in Fig. 3 and Fig. 4, the present application provides a battery cell 100, including a case 3, an end cover assembly 4, and an electrode assembly 1. The case 3 has an opening 31 arranged toward a first direction x, the electrode assembly 1 is provided in the case 3, and the end cover assembly 4 is configured to close the opening 31. The end cover assembly 4 includes an end cover body 41 and an electrode terminal 42 arranged on the end cover body 41. The case 3 may be provided with an opening 31 at both ends in the first direction x, respectively, and the openings 31 at both ends are respectively closed by an end cover body 41, each of the end cover body 41 is provided with an electrode terminal 42. The electrode terminal 42 may be arranged in a region close to an end of the end cover body 41 in a third direction z, or arranged in a middle region.

For example, the end cover body 41 is in a rectangular plate-like structure, the two electrode terminals 42 are a positive electrode terminal and a negative electrode terminal, respectively, one or more of each type of the electrode terminal 42 may be provided. The electrode terminal 42 may be in a rectangular column or cylindrical structure or the like. The electrode terminal 42 and the end cover body 41 may be integrally injection molded, so as to reduce assembly difficulty, other assembly manners can be used as well.

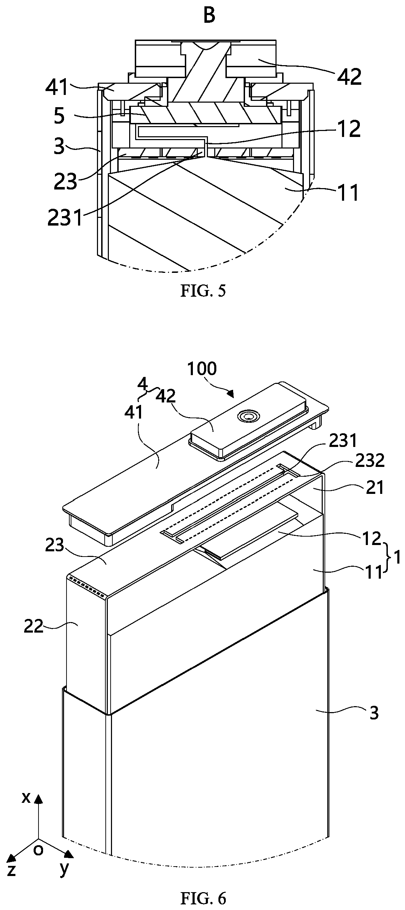

As shown in the enlarged view of Fig. 5, the electrode assembly 1 includes a main body portion 11 and a tab 12, and the tab 12 being connected with a side portion of the main body portion 11 in a first direction x. For example, the electrode assembly 1 includes two kinds of tabs 12 with opposite polarities, and the two kinds of tabs 12 are respectively led out from two sides of the main body portion 11 in the first direction x, and are respectively electrically connected with a electrode terminal 42 through an adapter 5. Optionally, the case 3 may be provided with an opening 31 at one end in the first direction x, and the opening 31 is closed by the end cover body 41, and both of the two electrode terminals 42 are provided on the same end cover body 41.

According to the invention, as shown in Fig. 6, the battery cell 100 further includes a protective frame 2, the protective frame 2 is of an integrated structure and includes three segments of protective plates integrally joined together and respectively used for protecting three side faces of the main body portion 11. The three segments of protective plates comprise a first plate 21, a second plate 22, and a third plate 23. The third plate 23 is located between the first plate 21 and the second plate 22, and two ends of the third plate 23 are respectively connected with a first end of the first plate 21 and a first end of the second plate 22. At least one of the first plate 21, the second plate 22, and the third plate 23 is provided with an opening 231, the tab 12 is led out from the opening 231.

The protective frame 2 may be made of metal material, and an insulating layer is arranged on the inner side face of the protective frame 2, or the protective frame 2 is made of hard insulating material such as polypropylene (PP). The protective frame 2 is of an integrated structure, and a thin plate structure is used, for example, it may be formed by folding a whole plate, or by fixing separate first plate 21, second plate 22, and third plate 23 through welding or the like. The protective plate may cover a part of or entire side faces of the main body portion 11. The first plate 21, the second plate 22, and the third plate 23 may form an n-shaped structure, and a second end of the first plate 21 and a second end of the second plate 22 are free ends. The tab 12 is led out from the opening 231 so as to constrict the tab 12, for the structure in which two kinds of tabs 12 are led out respectively from two ends of the main body portion 11, for ease of assembly, only one tab 12 may be led out from the opening 231 on the protective frame 2. The constricted tab 12 may be bent so as to be directly electrically connected with the electrode terminal 42, or electrically connected with the electrode terminal 42 through an adapter 5.

During assembly, the opening end of the protective frame 2 is facing the side end of the main body portion 11 from which the tab 12 is led out, and the tab 12 is led out from the opening 231, and then the protective frame 2 is moved so that the first plate 21, the second plate 22 and the third plate 23 abut against the respective to-be-protected side faces of the main body portion 11. There is a gap between each protective plate and respective to-be-protected side face to facilitate the electrolyte solution to flow into the main body portion 11. Further, in order to allow the electrolyte solution to enter the main body portion 11 smoothly, through holes may be arranged on the protective plate, for example, a plurality of through holes may be provided in different regions of the protective plate.

In these embodiments, by providing the protective frame 2 on the electrode assembly 1, the side faces of the electrode assembly 1 can be protected, so as to protect the electrode assembly 1 during the process of installing the electrode assembly 1 into the case 3 and after it being installed into the case 3, thereby preventing the electrode assembly 1 from being damaged. Moreover, the protective frame 2 is of an integrated structure with overall rigidity, after installation, the overall rigidity of the electrode assembly 1 can be improved, and assembly is facilitated. The protective frame 2 occupies a small space, having a small influence on the energy density of the battery cell 100, thereby having good adaptability to thin batteries.

In addition, the tab 12 is led out from the opening 231 on the protective frame 2, which has an effect of constricting the tab 12, bringing the fluffy tab together, and facilitating electrical connection with electrode terminal 42 by welding, it is also capable of preventing the tab 12 from being inserted into the main body portion 11 and causing the active material to fall off. By providing the protective frame 2 outside the electrode assembly 1, interference between the electrode assembly 1 and the rounded corners arranged at the edges of the case 3 can be avoided. The above advantages help to improve the reliability and safety of the battery cells 100 during assembly and use.

In some embodiments, all of the first plate 21, the second plate 22, and the third plate 23 are arranged parallel to a second direction y, the second direction y being perpendicular to the first direction x.

In these embodiments, the first plate 21 and the second plate 22 can be respectively used for protecting two side faces of the main body portion 11 adjacent to the side face from which the tab 12 is led out, and these two side faces are arranged opposite to each other in a third direction z, which facilitates the installation of the protective frame 2 outside the electrode assembly 1, and it is beneficial to strengthen the fixing effect on the root portion of the tab 12.

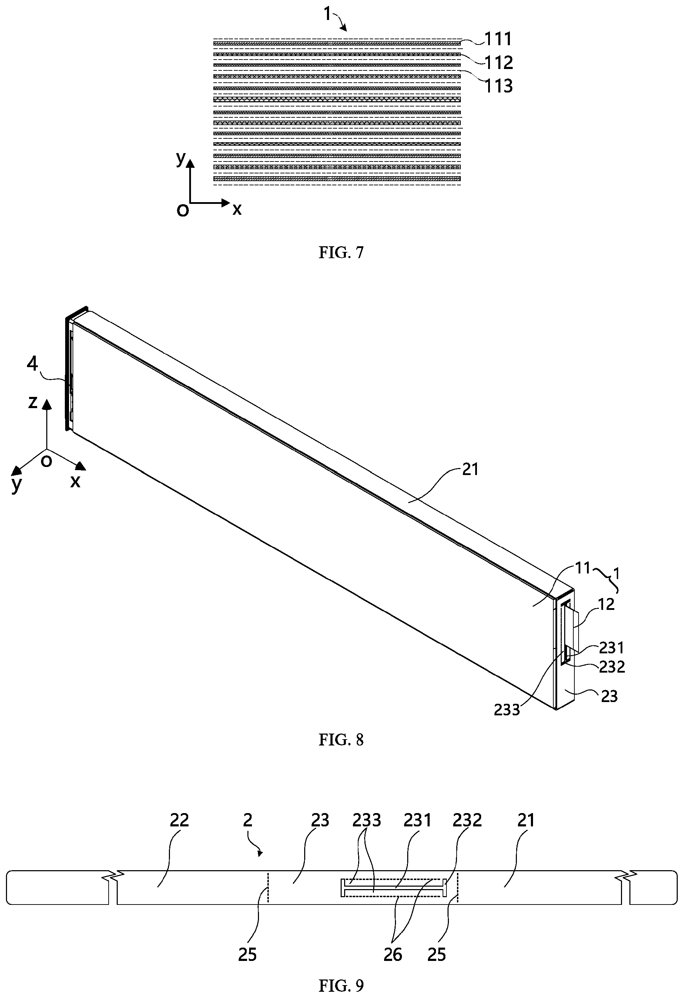

In some embodiments, as shown in Fig. 7, the electrode assembly 1 is of a laminated structure, the electrode assembly 1 has a first electrode sheet 111 and a second electrode sheet 112 with opposite polarities and being stacked along the second direction y, and the first plate 21 and the second plate 22 respectively protect two side faces of the main body portion 11 perpendicular to the third direction z, the third direction z being perpendicular to the first direction x and the second direction y. The first plate 21, the second plate 22, and the third plate 23 are all parallel to the second direction y, that is, parallel to the thickness direction of the electrode assembly 1.

Specifically, in the electrode assembly 1, the first electrode sheet 111, the second electrode sheet 112, and the separator 113 are stacked along the second direction y, the first electrode sheet 111 and the second electrode sheet 112 are alternately arranged, and the separator 113 separates the first electrode sheet 111 from the second electrode sheet 112. All of the first electrode sheet 111, the second electrode sheet 112, and the separator 113 may in a rectangular structure.

In these embodiments, a stacked type electrode assembly 1 is used, which is flexible in size. The first electrode sheet 111 and the second electrode sheet 112 may be cut into rectangular structures, which can better occupy the space in the case 3 and improve the energy density of the battery cell 100. With regard to the stacked type electrode assembly 1, since the first electrode sheet 111 and the second electrode sheet 112 are relatively independent, and the side ends thereof are not closed, by arranging the protective frame 2, it is possible to limit the outer periphery of the first electrode sheet 111 and the second electrode sheet 112, so that all the first electrode sheets 111 and the second electrode sheets 112 can be aligned, the first plate 21 and the second plate 22 respectively protect two side faces of the main body portion 11 perpendicular to the third direction z, which is equivalent to protecting three end faces of the electrode assembly 1 by means of the protective plate, it is capable of preventing impurities from entering the interior of main body portion 11 through the gap between the electrode sheets, and preventing the electrode assembly 1 from being damaged due to the fact that the end portions may not be completely aligned during the process of being installed into the case 3.

Optionally, the protective frame 2 of the present application may also be applied to the wound electrode assembly 1.

In some embodiments, as shown in Fig. 8, the electrode assembly 1 includes two tabs 12, the two tabs 12 are respectively located on both sides of the main body portion 11 in the first direction x, the opening 231 is provided on the third plate 23, and one of the tabs 12 is led out from the opening 231. The opening 231 may be provided in the middle region of the third plate 23 in the third direction z, or may be deviated.

In these embodiments, one of the tabs 12 is led out from the opening 231 on the protective frame 2, which facilitates the installation of the protective frame 2 from this side of the tab 12, it is easy to assemble.

In some embodiments, as shown in Fig. 7, each of the first plate 21, the second plate 22, and the third plate 23 entirely covers the respective to-be-protected side face of the main body portion 11. Specifically, the first plate 21 and the second plate 22 may extend along the first direction x to an end cover body 41 on the other side, and the widths of the first plate 21, the second plate 22, and the third plate 23 are no less than the size of the electrode assembly 1 in the second direction y, that is, the thickness of the electrode assembly 1.

In these embodiments, sufficient protection can be provided for side faces of the main body portion 11 by means of the protective plate, which has a better protection effect, and is capable of maximizing the overall rigidity of the electrode assembly 1. Optionally, the first plate 21, the second plate 22, and the third plate 23 may also partially cover respective to-be-protected side faces.

In some embodiments, as shown in Fig. 8, a joint between the third plate 23 and the first plate 21 and a joint between the third plate 23 and the second plate 22 are both provided with a first pre-crease 25, and the first pre-crease 25 may extend along the second direction y. For example, the first pre-crease 25 may be a line with continuously decreasing thickness, or a line with intermittently decreasing thickness or intermittently provided with through grooves.

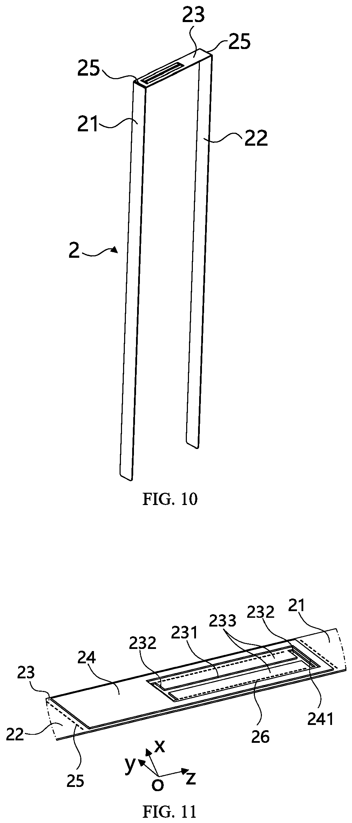

In these embodiments, by providing the first pre-crease 25, as shown in Fig. 9, before assembly, the protective frame 2 is in a long-strip structure, and is not easy to deform during storage and transfer. As shown in Fig. 10, during assembly, the protective frame 2 is bent at first pre-crease 25 to form a predetermined structure. Since the strength of the protective frame 2 at first pre-crease 25 is less than another positions, the shape of the protective frame 2 can be better matched with the electrode assembly 1 after bending, so that the protective frame 2 can better protect the electrode assembly 1. For example, during assembly, the tab 12 can pass through the opening 231 first, and then the protective frame 2 can be bent; or the protective frame 2 can be bent first, and then the tab 12 can pass through the opening 231.

In some embodiments, the thickness of the third plate 23 is greater than the thickness of the first plate 21 and the second plate 22. Alternatively, as shown in Fig. 11, the protective frame 2 further includes a reinforcing plate 24. The reinforcing plate 24 is attached to a side face of the third plate 23, and the sum of thicknesses of the reinforcing plate 24 and the third plate 23 is greater than thickness of the first plate 21 and the second plate 22. For example, the reinforcing plate 24 may be adhered to a side face of the third plate 23 through an adhesive, or, if the reinforcing plate 24 is a metal plate, it can be welded to the third plate 23, or the reinforcing plate 24 may be a hot-melt plastic plate, which can be fixed to the third plate 23 through hot melt.

In these embodiments, by increasing the thickness of the third plate 23, the overall strength of the protective frame 2 can be increased, the overall protection effect on the electrode assembly 1 can be improved, and the protection effect on the tab 12 can be improved.

According to the invention, as shown in Fig. 11, the opening 231 extends along the width direction of the tab 12, the at least one of the first plate, the second plate and the third plate is provided with a cutout 232 at both ends of the opening 231 along the width direction of the tab 12 respectively, and each cutout 232 extends by a preset distance to both sides of the opening 231, so that the opening 231 and the two cutouts 232 define two door structures 233, and the two door structures 233 are configured to be relatively openable in a direction away from the main body portion 11.

For example, the tab 12 is arranged at an end portion of the main body portion 11 in the first direction x, the width direction of the tab 12 may be consistent with the third direction z, the opening 231 extends along the third direction z, and the extension length is not less than the width of the tab 12. The cutout 232 may extend by a preset distance from an end portion of the opening 231 to both sides in the second direction y, so that portions of the two cutouts 232 on a same side of the opening 231 and the opening 231 together define a door structure 233. The cutout 232 may be a cut line, or may be an elongated groove, so as to prevent the door structure 233 from interfering with other regions of the third plate 23 when it is opened or closed.

In these embodiments, by arranging two cutouts 232 at both ends of the opening 231, the two door structures 233 are defined by the cutouts and the opening 231 together, and the two door structures 233 can be opened outward, which facilitates the tab 12 to pass through the opening 231, and after the tab 12 passing through, the door structure 233 returns to the original position under the action of an elastic force of the material or an external force to better constrict the tab 12. This structure not only facilitates the assembly between the protective frame 2 and the electrode assembly 1, but also ensures the constricting effect on the tab 12, thereby improving assembly performance.

In some embodiments, as shown in Fig. 11, a second pre-crease 26 is provided at a connecting line between end portions of the two cutouts 232 on the same side. The second pre-crease 26 may extend along the third direction z, for example, the second pre-crease 26 may be a line with continuously decreasing thickness, or a line with intermittently decreasing thickness or intermittently provided with through grooves.

In these embodiments, by providing the second pre-crease 26, the strength at the second pre-crease 26 is less than other positions, it is easier to open the door structure 233 outward with the second pre-crease 26 as the axis when the tab 12 is passed through the opening 231, which facilitates the tab 12 to pass through the opening 231. Furthermore, after the tab 12 passes through the opening 231, it is also convenient to press the door structure 233 back towards the main body portion 11 to ensure the constricting effect on the tab 12. Optionally, in order to open the door structure 233 conveniently, a sheet structure with elasticity or the like may also be used.

In some embodiments, as shown in Fig. 11, the protective frame 2 further includes a reinforcing plate 24, the reinforcing plate 24 is attached to an outer side face of the third plate 23, the reinforcing plate 24 is provided with a through groove 241, and the size of the through groove 241 is not smaller than the region defined by two cutouts 232.

Specifically, the size of the through groove 241 in the second direction y is not smaller than the size of the two cutouts 232 in the second direction y, and the size of the through groove 241 in the third direction z is not smaller than the distance between the two cutouts 232 in the third direction z.

In these embodiments, by providing the reinforcing plate 24, the thickness of the third plate 23 can be increased, the overall strength of the protective frame 2 can be increased, the overall protection effect on the electrode assembly 1 can be improved, and the protection effect on the tab 12 can be improved. On this basis, the door structure 233 can be avoided by arranging the through groove 241 on the reinforcing plate 24, so that the opening and closing of the door structure 233 is not restricted, thereby ensuring that the tab 12 passes through the opening 231 smoothly.

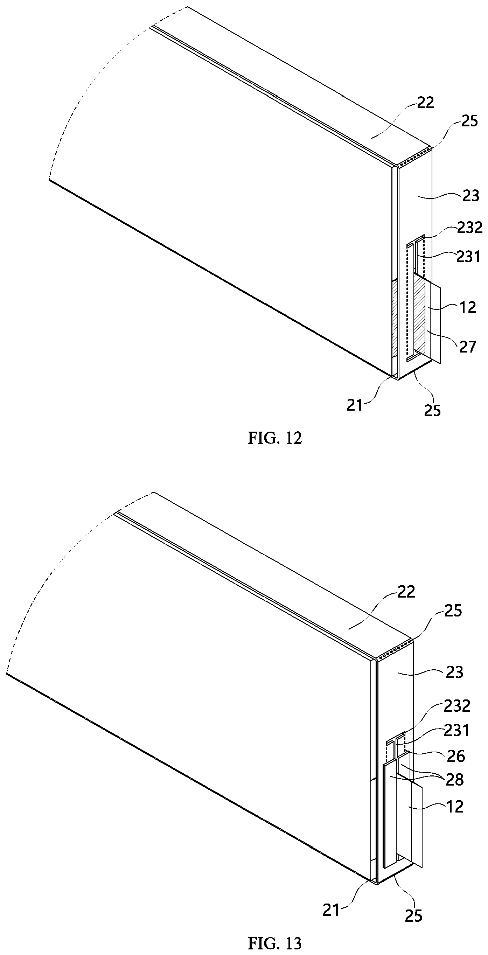

In some embodiments, as shown in Fig. 12, the battery cell 100 further includes an adhesive layer 27, the adhesive layer 27 is attached to the outer side of the tab 12, so as to fix the tab 12 with the protective plate provided with the opening 231. The adhesive layer 27 is adhered to the protective plate in a state where the tab 12 passes through the opening 231. For example, the adhesive layer 27 may be an adhesive plastic sheet or the like.

For example, the opening 231 is provided on the third plate 23, the adhesive layer 27 is attached to the outer side of the tab 12, and after the tab 12 passes through the opening 231, the third plate 23 is fixed with the tab 12 through the adhesive layer 27.

In these embodiments, before the protective frame 2 is installed, the adhesive layer 27 is attached to both sides of the tab 12, and after the tab 12 passes through the opening 231 and the protective frame 2 is installed in place, the protective plate and the tab 12 can be relatively fixed, so as to better constrict the tab 12, moreover, it is easy to arrange the adhesive layer 27 without increasing difficulty of the assembly.

In some embodiments, as shown in Fig. 13, the battery cell 100 further includes two plastic plates 28. The two plastic plates 28 are respectively provided on both sides of the opening 231. The plastic plates 28 are fixed on the outer side of the protective plate provided with the opening 231 through hot melt, and the tab 12 is led out from the gap between the opening 231 and the two plastic plates 28. For example, except for the edge close to the tab 12, the other three edges of the plastic plate 28 may be hot-melted, or only a part of area may be hot-melted, so as to be fixed to the outer side of the protective plate.

For example, the opening 231 is provided on the third plate 23 and is arranged long the third direction z, the two plastic plates 28 are respectively provided on both sides of the opening 231 along the second direction y, and an outer edge of the plastic plate 28 may exceed the second pre-crease 26 in the second direction y, so as to prevent the door structure 233 from being opened outward after the tab 12 passes through the opening 231.

In these embodiments, after the tab 12 passes through the opening 231, the two plastic plates 28 are fixed on the protective plate and on both sides of the tab 12 through hot melt, so that the protective plate and the tab 12 can be relatively fixed, so as to better constrict the tab 12. In addition, the plastic plates 28 are fixed after the tab 12 passes through the opening 231, so that the tab 12 can pass through smoothly, the plastic plates 28 further have an effect of reinforcing the protective plate, so as to increase the rigidity of the protective plate and provide a better constricting effect on the tab 12.

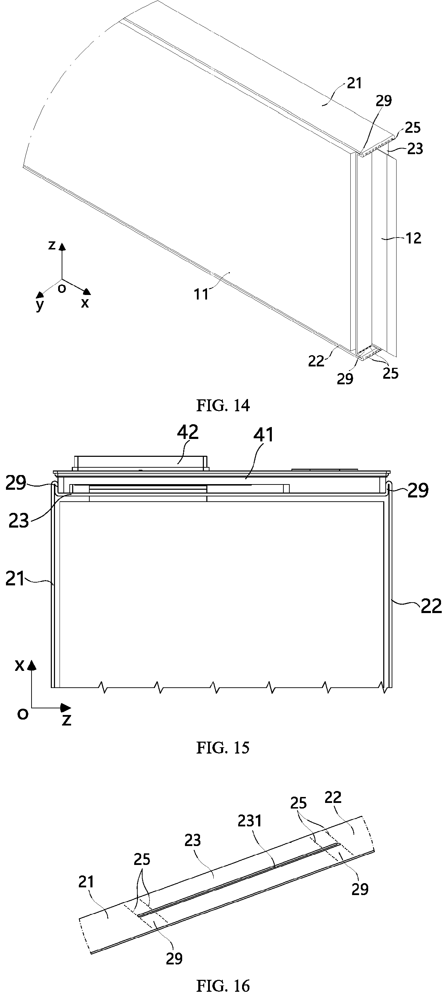

In some embodiments, as shown in Figs. 14 and 15, the opening 231 is provided on the third plate 23, and a first end of the first plate 21 and a first end of the second plate 22 are both higher than the outer side face of the third plate 23 in the first direction x.

In these embodiments, the tab 12 is protected by the portions of the first plate 21 and the second plate 22 which higher than the third plate 23, so that the end portion of the tab 12 in the width direction is prevented from being damaged during assembly or use, which provides better protection for a structure in which the width of the tab 12 extends close to the end of the main body portion, thereby avoiding contact short circuit between the tab 12 and the case 3 due to vibration or impact during use.

In some embodiments, the protective frame 2 further includes two segments of connecting plates 29, and two ends of the third plate 23 are respectively connected with a first end of the first plate 21 and a first end of the second plate 22 through a segment of the connecting plate 29. The first plate 21, a connecting plate 29, the third plate 23, a connecting plate 29 and the second plate 22 are sequentially connected to form the protective frame 2.

In these embodiments, by arranging the connecting plates 29 at joints between both ends of the third plate 23 and the first plate 21 and the second plate 22 respectively, which not only facilitates forming the special-shaped protective frame 2 integrally, but also increases the strength of the protective frame 2 at bend positions, so that overall rigidity of the protective frame 2 can be improved, thereby protecting the electrode assembly 1 effectively.

In some embodiments, a joint between the first plate 21 and the connecting plate 29, joints between both ends of the third plate 23 and respective connecting plates 29, and a joint between the second plate 22 and the connecting plate 29 are all provided with a first pre-crease 25.

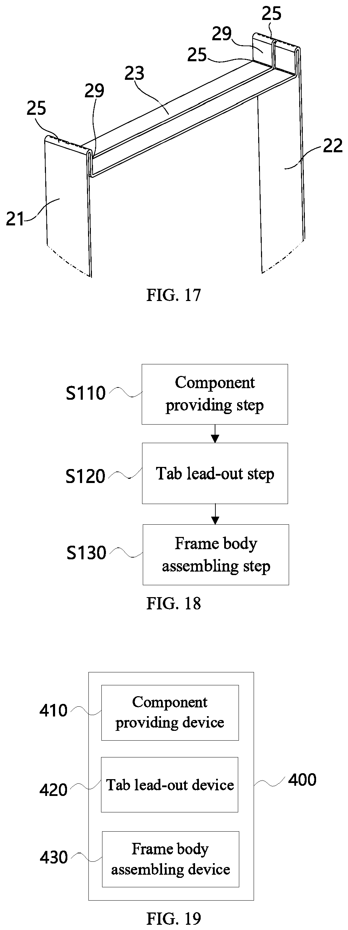

As shown in Fig. 16, wherein the cutouts are not depicted, in these embodiments, before assembly, the protective frame 2 may be arranged as a long-strip structure, so that it is not easy to deform during storage and transfer. Specifically, two of the first pre-creases 25 which are spaced apart by a preset distance may be arranged on both sides of the third plate 23 respectively, and the preset distance is the width of the connecting plate 29, and the opening 231 may extend on the third plate 23 utile reach the outermost first pre-creases 25. As shown in Fig. 17, during assembly, the protective frame 2 is bent at first pre-creases 25 to form a predetermined structure. Since the strength of the protective frame 2 at first pre-creases 25 is less than other positions, after bending, the shape of the protective frame 2 can be better matched with the electrode assembly 1, so that the protective frame 2 can provide better protection for the electrode assembly 1. For example, during assembly, the tab 12 can pass through the opening 231 first, and then the protective frame 2 can be bent; or the protective frame 2 can be bent first, and then the tab 12 can pass through the opening 231.

Schematic structural diagrams of a battery cell according to some specific embodiments of the present application will be described below with reference to Fig. 3 to Fig. 13.

As shown in Figs. 3 and 4, the battery cell 100 includes a case 3, an end cover assembly 4, and an electrode assembly 1. The case 3 has an opening 31 arranged toward the first direction x, the electrode assembly 1 is provided in the case 3, and the end cover assembly 4 is configured to close the opening 31. The end cover assembly 4 includes an end cover body 41 and an electrode terminal 42 arranged on the end cover body 41. The case 3 may be provided with openings 31 at both ends in the first direction x, respectively, and the openings 31 at both ends are respectively closed by an end cover body 41, each of the end cover body 41 is provided with an electrode terminal 42. The two electrode terminals 42 are located in regions of the respective end cover bodies 41 close to different end portions along the third direction z. As shown in Fig. 5, the tab 12 may be electrically connected with the electrode terminal 42 through an adapter 5.

As shown in Fig. 6, the battery cell 100 further includes a protective frame 2. The protective frame 2 is in an integrally formed structure and includes three segments of protective plates. The three segments of protective plates comprising a first plate 21, a second plate 22, and a third plate 23. The third plate 23 is located between the first plate 21 and the second plate 22, and two ends of the third plate 23 are respectively connected with a first end of the first plate 21 and a first end of the second plate 22. An opening 231 is provided on the third plate 23, the opening 231 extends along the third direction z, and is deviate to one end of the third plate 23 with respect to the central position. The opening 231 may be an elongated groove, and the tab 12 is led out from the opening 231. The third plate 23 is located between the main body portion 11 and the end cover assembly 4.

As shown in Fig. 7, the electrode assembly 1 is of a laminated structure. In the electrode assembly 1, the first electrode sheet 111, the second electrode sheet 112, and the separator 113 are stacked along the second direction y. The first electrode sheet 111 and the second electrode sheet 112 have opposite polarities and they are alternately arranged, and the separator 113 separates the first electrode sheet 111 from the second electrode sheet 112.

As shown in Fig. 8, the first plate 21, the second plate 22, and the third plate 23 are all arranged parallel to the second direction y, and respectively protect three side ends of the electrode assembly 1, the first plate 21 and the second plate 22 are both perpendicular to the third direction z and are arranged opposite to each other, the third plate 23 being perpendicular to the first direction x.

As shown in Fig. 9, before assembly, the protective frame 2 is in a long-strip thin plate structure. A joint between the third plate 23 and the first plate 21 and a joint between the third plate 23 and the second plate 22 are both provided with a first pre-crease 25, and the first pre-crease 25 may extend along the second direction y.

As shown in Fig. 10, the protective frame 2 is bent at the first pre-crease 25 to form an n-shaped structure, the shape thereof matches the electrode assembly 1. During assembly, the tab 12 can pass through the opening 231 first, and then the protective frame 2 can be bent; or the protective frame 2 can be bent first, and then the tab 12 can pass through the opening 231.

As shown in Fig. 11, the thickness of the third plate 23 is greater than the thickness of the first plate 21 and the second plate 22, or the protective frame 2 further includes a reinforcing plate 24. The reinforcing plate 24 is attached to an outer side face of the third plate 23, and the sum of thicknesses of the reinforcing plate 24 and the third plate 23 is greater than the thickness of the first plate 21 and the second plate 22. For example, the reinforcing plate 24 may be a hot-melt plastic plate, which can be fixed to the third plate 23 through hot melt.

The opening 231 extends along the width direction of the tab 12, where the width direction of the tab 12 is the third direction z, the third plate 23 is provided with a cutout 232 at both ends of the opening 231 along the width direction of the tab 12, and each cutout 232 extends by a preset distance to both sides of the opening 231, so that the opening 231 and the two cutouts 232 define two door structures 233, and a second pre-crease 26 is provided at a connecting line between end portions of the two cutouts 232 on the same side. The second pre-crease 26 may extend along the third direction z.

When the tab 12 passes through the opening 231, the two door structures 233 rotate along the second pre-crease 26 to be relatively opened in a direction away from the main body portion 11, and after the tab 12 passes through, the door structure 233 returns to the original position under the action of an elastic force of the material or an external force to better constrict the tab 12.

As shown in Fig. 12, the battery cell 100 further includes an adhesive layer 27, the adhesive layer 27 is attached to the outer side of the tab 12, so as to fix the tab 12 with the protective plate provided with the opening 231. Before the protective frame 2 is installed, the adhesive layer 27 is attached to both sides of the tab 12, and after the tab 12 passes through the opening 231 and the protective frame 2 is installed in place, the protective plate and the tab 12 can be relatively fixed, so as to better constrict the tab 12.

As shown in Fig. 13, the battery cell 100 further includes two plastic plates 28. The two plastic plates 28 are respectively provided on both sides of the opening 231. The plastic plates 28 are fixed, through hot melt, on the outer side of the protective plate provided with the opening 231, and the tab 12 is led out from the gap between the opening 231 and the two plastic plates 28. After the tab 12 passes through the opening 231, the two plastic plates 28 are fixed on the protective plate and on both sides of the tab 12 through hot melt, so that the protective plate and the tab 12 can be relatively fixed, so as to better constrict the tab 12.

Next, the present application provides a manufacturing method of a battery cell 100. In some embodiments, as shown in Fig. 18, the manufacturing method comprises the following steps:
S110, a component providing step of providing an electrode assembly 1 and a protective frame 2; wherein the electrode assembly 1 comprises a main body portion 11 and a tab 12, the tab 12 is arranged on a side portion of the main body portion 11 in a first direction x, the protective frame 2 is of an integrated structure and includes three segments of protective plates respectively used for protecting three side faces of the main body portion 11, the three segments of protective plates comprise a first plate 21, a second plate 22 and a third plate 23, the third plate 23 is located between the first plate 21 and the second plate 22, and two ends of the third plate 23 are respectively connected with a first end of the first plate 21 and a first end of the second plate 22, and at least one of the first plate 21, the second plate 22 and the third plate 23 is provided with an opening 231;
S120, a tab lead-out step of leading out the tab 12 from the opening 231; and
S130, a frame body assembling step of using three segments of protective plates to protect three side faces of the main body portion 11 respectively.
wherein S110, S120, and S130 are executed sequentially.

Finally, the present application provides a manufacturing apparatus 400 for a battery cell 100. In some embodiments, as shown in Fig. 19, the manufacturing apparatus 400 includes a component providing device 410, a tab lead-out device 420, and a frame body assembling device 430.

The component providing device 410 is configured to provide an electrode assembly 1 and a protective frame 2; wherein the electrode assembly 1 comprises a main body portion 11 and a tab 12, the tab 12 is arranged on a side portion of the main body portion 11 in a first direction x, the protective frame 2 is of an integrated structure and includes three segments of protective plates respectively used for protecting three side faces of the main body portion 11, the three segments of protective plates comprise a first plate 21, a second plate 22 and a third plate 23, the third plate 23 is located between the first plate 21 and the second plate 22, and two ends of the third plate 23 are respectively connected with a first end of the first plate 21 and a first end of the second plate 22, and at least one of the first plate 21, the second plate 22 and the third plate 23 is provided with an opening 231.

The tab lead-out device 420 is configured to lead out the tab 12 from the opening 231.

The frame body assembling device 430 is configured to protect three side faces of the main body portion 11 by using three segments of protective plates respectively.

The present application is not limited to the specific embodiments disclosed herein, but rather includes all technical solutions falling within the scope of the claims.

## Claims

1. A battery cell (100), comprising:
an electrode assembly (1) comprising a main body portion (11) and a tab (12), the tab (12) being connected with a side portion of the main body portion (11) in a first direction (x); and
a protective frame (2), comprising three segments of protective plates integrally joined together and respectively used for protecting three side faces of the main body portion (11), wherein:
the three segments of protective plates comprise a first plate (21), a second plate (22), and a third plate (23) located between the first plate (21) and the second plate (22) and having two ends respectively connected with a first end of the first plate (21) and a first end of the second plate (22), and at least one of the first plate (21), the second plate (22) and the third plate (23) is provided with an opening (231);
the tab (12) is led out from the opening (231),
and
the opening (231) extends along a width direction of the tab (12);
**characterized in that**
the at least one of the first plate (21), the second plate (22) and the third plate (23) is provided with a cutout (232) at each end of the opening (231) along the width direction of the tab (12);
each of the cutouts (232) extends by a preset distance to both sides of the opening (231), so that the opening (231) and two of the cutouts (232) define two door structures (233); and
the two door structures (233) are configured to be relatively openable in a direction away from the main body portion (11).

2. The battery cell (100) according to claim 1, wherein the first plate (21), the second plate (22) and the third plate (23) are all arranged parallel to a second direction (y), the second direction (y) being perpendicular to the first direction (x),
wherein preferably, the electrode assembly (1) is of a laminated structure, the electrode assembly (1) has a first electrode sheet (111) and a second electrode sheet (112) with opposite polarities and being stacked along the second direction (y), and the first plate (21) and the second plate (22) respectively protect two side faces of the main body portion (11) perpendicular to a third direction (z), the third direction (z) being perpendicular to the first direction (x) and the second direction (y).

3. The battery cell (100) according to claim 1 or 2, wherein the electrode assembly (1) comprises two tabs (12), the two tabs (12) are respectively located on both sides of the main body portion (11) in the first direction (x), the opening (231) is provided on the third plate (23), and one of the tabs (12) is led out from the opening (231).

4. The battery cell (100) according to any one of claims 1 to 3, wherein each of the first plate (21), the second plate (22) and the third plate (23) entirely covers the respective side face of the main body portion (11).

5. The battery cell (100) according to any one of claims 1 to 4, wherein a joint between the third plate (23) and the first plate (21) and a joint between the third plate (23) and the second plate (22) are both provided with a first pre-crease (25).

6. The battery cell (100) according to any one of claims 1 to 5, wherein
the thickness of the third plate (23) is greater than that of the first plate (21) and the second plate (22); or
the battery cell (100) further comprises a reinforcing plate (24), the reinforcing plate (24) is attached to a side face of the third plate (23), and a sum of thicknesses of the reinforcing plate (24) and the third plate (23) is greater than the thickness of the first plate (21) and the second plate (22).

7. The battery cell (100) according to any one of claims 1 to 6, wherein:
a second pre-crease (26) is provided at a connecting line between end portions of two of the cutouts (232) on the same side; and/or
the protective frame (2) further comprises a reinforcing plate (24), the reinforcing plate (24) is attached to an outer side face of the third plate (23), the reinforcing plate (24) is provided with a through groove (241), and the size of the through groove (241) is not smaller than a region defined by two of the cutouts (232).

8. The battery cell (100) according to any one of claims 1 to 7, further comprising an adhesive layer (27), wherein the adhesive layer (27) is attached to an outer side of the tab (12), so as to fix the tab (12) with the protective plate provided with the opening (231).

9. The battery cell (100) according to any one of claims 1 to 8, further comprising two plastic plates (28), the two plastic plates (28) are respectively provided on both sides of the opening (231), the plastic plates (28) are fixed, through hot melt, on the outer side of the protective plate provided with the opening (231), and the tab (12) is led out from a gap between the opening (231) and the two plastic plates (28).

10. The battery cell (100) according to any one of claims 1 to 9, wherein the opening (231) is provided on the third plate (23), and a first end of the first plate (21) and a first end of the second plate (22) are both higher than an outer side face of the third plate (23) in the first direction (x).

11. The battery cell (100) according to claim 10, wherein the protective frame (2) further comprises two segments of connecting plates (29), and two ends of the third plate (23) are respectively connected with the first end of the first plate (21) and the first end of the second plate (22) through a segment of the connecting plate (29),
wherein preferably, a joint between the first plate (21) and the connecting plate (29), joints between two ends of the third plate (23) and respective connecting plates (29), and a joint between the second plate (22) and the connecting plate (29) are all provided with a first pre-crease (25).

12. A battery (200), comprising:
the battery cell (100) of any one of claims 1 to 11; and
a shell assembly (201) for accommodating the battery cell (100).

13. An electrical apparatus, comprising the battery (200) of claim 12, the battery (200) being used to provide electric energy for the electrical apparatus.

14. A manufacturing method for a battery cell (100), comprising:
a component providing step of providing an electrode assembly (1) and a protective frame (2); wherein the electrode assembly (1) comprises a main body portion (11) and a tab (12), the tab (12) is provided on a side portion of the main body portion (11) in a first direction (x), the protective frame (2) comprises three segments of protective plates integrally joined together and respectively used for protecting three side faces of the main body portion (11), the three segments of protective plates comprise a first plate (21), a second plate (22), and a third plate (23) located between the first plate (21) and the second plate (22) and having two ends are respectively connected with a first end of the first plate (21) and a first end of the second plate (22), and at least one of the first plate (21), the second plate (22) and the third plate (23) is provided with an opening (231);
a tab lead-out step of leading out the tab (12) from the opening (231); and
a frame body assembling step of using three segments of the protective plates to protect three side faces of the main body portion (11) respectively,
wherein
the opening (231) extends along a width direction of the tab (12);
**characterized in that**
the at least one of the first plate (21), the second plate (22) and the third plate (23) is provided with a cutout (232) at each end of the opening (231) along the width direction of the tab (12);
each of the cutouts (232) extends by a preset distance to both sides of the opening (231), so that the opening (231) and two of the cutouts (232) define two door structures (233); and
the two door structures (233) are configured to be relatively openable in a direction away from the main body portion (11).

## Patentansprüche

1. Batteriezelle (100), umfassend:
eine Elektrodenanordnung (1), umfassend einen Hauptkörperabschnitt (11) und eine Lasche (12), wobei die Lasche (12) in einer ersten Richtung (x) mit einem Seitenabschnitt des Hauptkörperabschnitts (11) verbunden ist; und
einen Schutzrahmen (2), umfassend drei Segmente aus Schutzplatten, die einstückig aneinandergefügt sind und jeweils zum Schützen einer der drei Seitenflächen des Hauptkörperabschnitts (11) verwendet werden, wobei:
die drei Segmente aus Schutzplatten eine erste Platte (21), eine zweite Platte (22) und eine dritte Platte (23), die sich zwischen der ersten Platte (21) und der zweiten Platte (22) befindet und zwei Enden aufweist, die jeweils mit einem ersten Ende der ersten Platte (21) bzw. einem ersten Ende der zweiten Platte (22) verbunden sind, umfassen und mindestens eine von der ersten Platte (21), der zweiten Platte (22) und der dritten Platte (23) mit einer Öffnung (231) versehen ist;
die Lasche (12) aus der Öffnung (231) herausgeführt ist und
sich die Öffnung (231) entlang einer Breitenrichtung der Lasche (12) erstreckt;
**dadurch gekennzeichnet, dass**
die mindestens eine von der ersten Platte (21), der zweiten Platte (22) und der dritten Platte (23) mit einem Ausschnitt (232) an jedem Ende der Öffnung (231) entlang der Breitenrichtung der Lasche (12) versehen ist;
sich jeder der Ausschnitte (232) um eine vorgegebene Strecke zu beiden Seiten der Öffnung (231) erstreckt, sodass die Öffnung (231) und zwei der Ausschnitte (232) zwei Klappenstrukturen (233) definieren; und
die zwei Klappenstrukturen (233) dazu konfiguriert sind, in einer Richtung von dem Hauptkörperabschnitt (11) weg relativ öffenbar zu sein.

2. Batteriezelle (100) nach Anspruch 1, wobei die erste Platte (21), die zweite Platte (22) und die dritte Platte (23) alle parallel zu einer zweiten Richtung (y) angeordnet sind, wobei die zweite Richtung (y) zu der ersten Richtung (x) senkrecht ist,
wobei vorzugsweise die Elektrodenanordnung (1) einen laminierten Aufbau aufweist, die Elektrodenanordnung (1) ein erstes Elektrodenblech (111) und ein zweites Elektrodenblech (112) mit entgegengesetzten Polaritäten aufweist, die entlang der zweiten Richtung (y) gestapelt sind, und wobei die erste Platte (21) bzw. die zweite Platte (22) jeweils eine von zwei zu einer dritten Richtung (z) senkrechten Seitenflächen des Hauptkörperabschnitts (11) schützt, wobei die dritte Richtung (z) zu der ersten Richtung (x) und der zweiten Richtung (y) senkrecht ist.

3. Batteriezelle (100) nach Anspruch 1 oder 2, wobei die Elektrodenanordnung (1) zwei Laschen (12) umfasst, sich die zwei Laschen jeweils in der ersten Richtung (x) auf einer von beiden Seiten des Hauptkörperabschnitts (11) befinden, die Öffnung (231) in der dritten Platte (23) bereitgestellt ist und eine der Laschen (12) aus der Öffnung (231) herausgeführt ist.

4. Batteriezelle (100) nach einem der Ansprüche 1 bis 3, wobei jede von der ersten Platte (21), der zweiten Platte (22) bzw. der dritten Platte (23) die jeweilige Seitenfläche des Hauptkörperabschnitts (11) vollständig bedeckt.

5. Batteriezelle (100) nach einem der Ansprüche 1 bis 4, wobei eine Verbindungsstelle zwischen der dritten Platte (23) und der ersten Platte (21) und eine Verbindungsstelle zwischen der dritten Platte (23) und der zweiten Platte (22) beide mit einem ersten Vorabfalz (25) versehen sind.

6. Batteriezelle (100) nach einem der Ansprüche 1 bis 5, wobei:
die Dicke der dritten Platte (23) größer als diejenige der ersten Platte (21) und der zweiten Platte (22) ist; oder
die Batteriezelle (100) ferner eine Verstärkungsplatte (24) umfasst, die Verstärkungsplatte (24) an einer Seitenfläche der dritten Platte (23) angebracht ist und eine Summe von Dicken der Verstärkungsplatte (24) und der dritten Platte (23) größer als die Dicke der ersten Platte (21) und der zweiten Platte (22) ist.

7. Batteriezelle (100) nach einem der Ansprüche 1 bis 6, wobei:
an einer Verbindungslinie zwischen Endabschnitten von zweien der Ausschnitte (232) auf derselben Seite ein zweiter Vorabfalz (26) bereitgestellt ist; und/oder
der Schutzrahmen (2) ferner eine Verstärkungsplatte (24) umfasst, die Verstärkungsplatte (24) an einer äußeren Seitenfläche der dritten Platte (23) angebracht ist, die Verstärkungsplatte (24) mit einer Durchgangsnut (241) versehen ist und die Größe der Durchgangsnut (241) nicht kleiner als ein durch zwei der Ausschnitte (232) definierter Bereich ist.

8. Batteriezelle (100) nach einem der Ansprüche 1 bis 7, ferner umfassend eine Klebeschicht (27), wobei die Klebeschicht (27) an einer äußeren Seite der Lasche (12) angebracht ist, um die Lasche (12) mit der mit der Öffnung (231) versehenen Schutzplatte zu fixieren.

9. Batteriezelle (100) nach einem der Ansprüche 1 bis 8, ferner umfassend zwei Kunststoffplatten (28), wobei die zwei Kunststoffplatten (28) jeweils auf einer von beiden Seiten der Öffnung (231) bereitgestellt sind, die Kunststoffplatten (28) durch Heißkleber auf der äußeren Seite der mit der Öffnung (231) versehenen Schutzplatte fixiert sind und die Lasche (12) aus einem Zwischenraum zwischen der Öffnung (231) und den zwei Kunststoffplatten (28) herausgeführt ist.

10. Batteriezelle (100) nach einem der Ansprüche 1 bis 9, wobei die Öffnung (231) in der dritten Platte (23) bereitgestellt ist und ein erstes Ende der ersten Platte (21) und ein erstes Ende der zweiten Platte (22) beide in der ersten Richtung (x) höher als eine äußere Seitenfläche der dritten Platte (23) sind.

11. Batteriezelle (100) nach Anspruch 10, wobei der Schutzrahmen (2) ferner zwei Segmente von Verbindungsplatten (29) umfasst und zwei Enden der dritten Platte (23) jeweils über ein Segment der Verbindungsplatte (29) mit dem ersten Ende der ersten Platte (21) bzw. dem ersten Ende der zweiten Platte (22) verbunden sind,
wobei vorzugsweise eine Verbindungsstelle zwischen der ersten Platte (21) und der Verbindungsplatte (29), Verbindungsstellen zwischen zwei Enden der dritten Platte (23) und jeweiligen Verbindungsplatten (29) und eine Verbindungsstelle zwischen der zweiten Platte (22) und der Verbindungsplatte (29) alle mit einem ersten Vorabfalz (25) versehen sind.

12. Batterie (200), umfassend:
die Batteriezelle (100) nach einem der Ansprüche 1 bis 11; und
eine Hüllenanordnung (201) zum Aufnehmen der Batteriezelle (100).

13. Elektrische Vorrichtung, umfassend die Batterie (200) nach Anspruch 12, wobei die Batterie (200) dazu verwendet wird, elektrische Energie für die elektrische Vorrichtung bereitzustellen.

14. Herstellungsverfahren für eine Batteriezelle (100), umfassend:
einen Komponentenbereitstellungsschritt des Bereitstellens einer Elektrodenanordnung (1) und eines Schutzrahmens (2); wobei die Elektrodenanordnung (1) einen Hauptkörperabschnitt (11) und eine Lasche (12) umfasst, die Lasche (12) in einer ersten Richtung (x) an einem Seitenabschnitt des Hauptkörperabschnitts (11) bereitgestellt wird, der Schutzrahmen (2) drei Segmente aus Schutzplatten umfasst, die einstückig aneinandergefügt sind und jeweils zum Schützen einer von drei Seitenflächen des Hauptkörperabschnitts (11) verwendet werden, die drei Segmente aus Schutzplatten eine erste Platte (21), eine zweite Platte (22) und eine dritte Platte (23), die sich zwischen der ersten Platte (21) und der zweiten Platte (22) befindet und zwei Enden aufweist, die jeweils mit einem ersten Ende der ersten Platte (21) bzw. einem ersten Ende der zweiten Platte (22) verbunden sind, umfassen und mindestens eine von der ersten Platte (21), der zweiten Platte (22) und der dritten Platte (23) mit einer Öffnung (231) versehen ist;
einen Laschenherausführungsschritt des Herausführens der Lasche (12) aus der Öffnung (231); und
einen Rahmenkörperzusammenbauschritt des Verwendens von drei Segmenten der Schutzplatten, um jeweils eine von drei Seitenflächen des Hauptkörperabschnitts (11) zu schützen,
wobei
sich die Öffnung (231) entlang einer Breitenrichtung der Lasche (12) erstreckt;
**dadurch gekennzeichnet, dass**
die mindestens eine von der ersten Platte (21), der zweiten Platte (22) und der dritten Platte (23) mit einem Ausschnitt (232) an jedem Ende der Öffnung (231) entlang der Breitenrichtung der Lasche (12) versehen ist;
sich jeder der Ausschnitte (232) um eine vorgegebene Strecke zu beiden Seiten der Öffnung (231) erstreckt, sodass die Öffnung (231) und zwei der Ausschnitte (232) zwei Klappenstrukturen (233) definieren; und
die zwei Klappenstrukturen (233) dazu konfiguriert sind, in einer Richtung von dem Hauptkörperabschnitt (11) weg relativ öffenbar zu sein.

## Revendications

1. Cellule de batterie (100), comprenant :
un ensemble électrode (1) comprenant une partie corps principal (11) et une patte (12), la patte (12) étant reliée à une partie latérale de la partie corps principal (11) dans une première direction (x) ; et
une structure de protection (2), comprenant trois segments de plaque de protection réunis ensemble d'une seule pièce et utilisés respectivement pour protéger trois faces latérales de la partie corps principal (11), dans laquelle :
les trois segments de plaque de protection comprennent une première plaque (21), une deuxième plaque (22) et une troisième plaque (23) située entre la première plaque (21) et la deuxième plaque (22) et ayant deux extrémités respectivement reliées à une première extrémité de la première plaque (21) et une première extrémité de la deuxième plaque (22), et au moins l'une de la première plaque (21), la deuxième plaque (22) et la troisième plaque (23) est pourvue d'une ouverture (231) ;
la patte (12) est passée à travers l'ouverture (231),
et l'ouverture (231) s'étend le long d'une direction de largeur de la patte (12) ;
**caractérisée en ce que**
ladite au moins l'une de la première plaque (21), la deuxième plaque (22) et la troisième plaque (23) est pourvue d'une découpe (232) à chaque extrémité de l'ouverture (231) le long de la direction de largeur de la patte (12) ;
chacune des découpes (232) s'étend sur une distance prédéfinie vers les deux côtés de l'ouverture (231), de telle sorte que l'ouverture (231) et deux des découpes (232) définissent deux structures de porte (233) ; et
les deux structures de porte (233) sont conçues pour pouvoir être relativement ouvertes dans une direction qui s'éloigne de la partie corps principal (11).

2. Cellule de batterie (100) selon la revendication 1, dans laquelle la première plaque (21), la deuxième plaque (22) et la troisième plaque (23) sont toutes agencées parallèles à une deuxième direction (y), la deuxième direction (y) étant perpendiculaire à la première direction (x),
dans laquelle de préférence, l'ensemble électrode (1) est de structure stratifiée, l'ensemble électrode (1) comporte une première feuille d'électrode (111) et une deuxième feuille d'électrode (112) de polarités opposées et empilées le long de la deuxième direction (y), et la première plaque (21) et la deuxième plaque (22) respectivement protègent deux faces latérales de la partie corps principal (11) perpendiculaire à une troisième direction (z), la troisième direction (z) étant perpendiculaire à la première direction (x) et la deuxième direction (y).

3. Cellule de batterie (100) selon la revendication 1 ou 2, dans laquelle l'ensemble électrode (1) comprend deux pattes (12), les deux pattes (12) sont respectivement situées de part et d'autre de la partie corps principal (11) dans la première direction (x), l'ouverture (231) est ménagée sur la troisième plaque (23), et une des pattes (12) est passée à travers l'ouverture (231).

4. Cellule de batterie (100) selon l'une quelconque des revendications 1 à 3, dans laquelle chacune de la première plaque (21), la deuxième plaque (22) et la troisième plaque (23) couvre entièrement la face latérale respective de la partie corps principal (11).

5. Cellule de batterie (100) selon l'une quelconque des revendications 1 à 4, dans laquelle une jonction entre la troisième plaque (23) et la première plaque (21) et une jonction entre la troisième plaque (23) et la deuxième plaque (22) sont toutes deux pourvues d'un pré-pli (25).

6. Cellule de batterie (100) selon l'une quelconque des revendications 1 à 5, dans laquelle
l'épaisseur de la troisième plaque (23) est supérieure à celle de la première plaque (21) et de la deuxième plaque (22) ; ou
la cellule de batterie (100) comprend en outre une plaque de renforcement (24), la plaque de renforcement (24) est attachée à une face latérale de la troisième plaque (23), et une somme des épaisseurs de la plaque de renforcement (24) et de la troisième plaque (23) est supérieure à l'épaisseur de la première plaque (21) et la deuxième plaque (22).

7. Cellule de batterie (100) selon l'une quelconque des revendications 1 à 6, dans laquelle :
un deuxième pré-pli (26) est formé au niveau d'une ligne de liaison entre des parties d'extrémité de deux des découpes (232) sur le même côté ; et/ou
la structure de protection (2) comprend en outre une plaque de renforcement (24), la plaque de renforcement (24) est attachée à une face latérale externe de la troisième plaque (23), la plaque de renforcement (24) est pourvue d'une rainure traversante (241), et la taille de la rainure traversante (241) n'est pas inférieure à une région délimitée par deux des découpes (232).

8. Cellule de batterie (100) selon l'une quelconque des revendications 1 à 7, comprenant en outre une couche adhésive (27), la couche adhésive (27) étant attachée à un côté externe de la patte (12), de sorte à fixer la patte (12) avec la plaque de protection pourvue de l'ouverture (231).

9. Cellule de batterie (100) selon l'une quelconque des revendications 1 à 8, comprenant en outre deux plaques en plastique (28), les deux plaques en plastique (28) sont respectivement fournies de part et d'autre de l'ouverture (231), les plaques en plastique (28) sont fixées, par fusion à chaud, sur le côté externe de la plaque de protection pourvue de l'ouverture (231), et la patte (12) est passée à travers un espace entre l'ouverture (231) et les deux plaques en plastique (28).

10. Cellule de batterie (100) selon l'une quelconque des revendications 1 à 9, dans laquelle l'ouverture (231) est ménagée sur la troisième plaque (23), et une première extrémité de la première plaque (21) et une première extrémité de la deuxième plaque (22) sont toutes deux plus hautes qu'une face latérale externe de la troisième plaque (23) dans la première direction (x).

11. Cellule de batterie (100) selon la revendication 10, dans laquelle la structure de protection (2) comprend en outre deux segments de plaques de liaison (29), et deux extrémités de la troisième plaque (23) sont respectivement reliées à la première extrémité de la première plaque (21) et la première extrémité de la deuxième plaque (22) à travers un segment de la plaque de liaison (29),
dans laquelle de préférence, une jonction entre la première plaque (21) et la plaque de liaison (29), effectue une jonction entre deux extrémités de la troisième plaque (23) et des plaques de liaison (29) respectives, et une jonction entre la deuxième plaque (22) et la plaque de liaison (29) sont toutes pourvues d'un premier pré-pli (25).

12. Batterie (200), comprenant :
le cellule de batterie (100) selon l'une quelconque des revendications 1 à 11 ; et
un ensemble enveloppe (201) destiné à recevoir la cellule de batterie (100).

13. Appareil électrique, comprenant la batterie (200) selon la revendication 12, la batterie (200) étant utilisée pour fournir de l'énergie électrique à l'appareil électrique.

14. Procédé de fabrication d'une cellule de batterie (100) comprenant :
une étape de fourniture de composant consistant à fournir un ensemble électrode (1) et une structure de protection (2) ; dans lequel l'ensemble électrode (1) comprend une partie corps principal (11) et une patte (12), la patte (12) est fournie sur une partie latérale de la partie corps principal (11) dans une première direction (x), la structure de protection (2) comprend trois segments de plaque de protection réunis ensemble d'une seule pièce et respectivement utilisés pour protéger trois faces latérales de la partie corps principal (11), les trois segments de plaque de protection comprennent une première plaque (21), une deuxième plaque (22) et une troisième plaque (23) située entre la première plaque (21) et la deuxième plaque (22) et ayant deux extrémités respectivement reliées à une première extrémité de la première plaque (21) et une première extrémité de la deuxième plaque (22), et au moins l'une de la première plaque (21), la deuxième plaque (22) et la troisième plaque (23) est pourvue d'une ouverture (231) ;
une étape de passage de patte consistant à faire passer la patte (12) à travers l'ouverture (231) ; et
une étape d'assemblage de corps de structure consistant à utiliser les trois segments de plaque de protection pour protéger trois faces latérales de la partie corps principal (11) respectivement,
dans lequel
l'ouverture (231) s'étend le long d'une direction de largeur de la patte (12) ;
**caractérisé en ce que**
ladite au moins l'une de la première plaque (21), la deuxième plaque (22) et la troisième plaque (23) est pourvue d'une découpe (232) à chaque extrémité de l'ouverture (231) le long de la direction de largeur de la patte (12) ;
chacune des découpes (232) s'étend sur une distance prédéfinie vers les deux côtés de l'ouverture (231), de telle sorte que l'ouverture (231) et deux des découpes (232) définissent deux structures de porte (233) ; et
les deux structures de porte (233) sont conçues pour pouvoir être relativement ouvertes dans une direction qui s'éloigne de la partie corps principal (11).
